# EUROPEAN PATENT APPLICATION

(11) **EP 2 551 499 A1**
(43) Date of publication of application: **30.01.2013**
(21) Application number: 10848424.7
(22) Date of filing: 26.03.2010
(51) Int. Cl.: F02D 41/38, F02B 23/02, F02D 41/40, F02D 45/00

(54) **COMBUSTION CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: NADA, Mitsuhiro, Toyota-shi Aichi 471-8571 (JP)
(74) Representative: TBK
(86) International application number: PCT/JP2010/055399
(87) International publication number: WO 2011/118031

(57) **Abstract**

In an internal combustion engine (engine) in which premixed combustion and diffusion combustion are carried out in a combustion chamber, the premixed combustion and the diffusion combustion are separated by carrying out a control to limit the minimum value of the heat generation rate between the combustion centroid of the premixed combustion and the combustion centroid of the diffusion combustion, or carrying out a control to adjust the interval between a first injection for the premixed combustion and a second injection for the diffusion combustion. In this manner, the combustion form in the combustion chamber is made separated combustion in which the premixed combustion and the diffusion combustion are separated, and therefore ignition delay in the earlier premixed combustion does not influence the later diffusion combustion, thus making it possible to use the respective advantages of the premixed combustion and the diffusion combustion. Accordingly, it is possible to achieve a reduction of emissions and combustion stability also during a transient operation or during use of fuel that has a low cetane rating.

## Description

### [Technical Field]

The present invention relates to a combustion control apparatus for a compression self-ignition internal combustion engine represented by a diesel engine.

### [Background Art]

In diesel engines used for, for example, automobile engines, the form of combustion in a combustion chamber (in a cylinder) is controlled by adjusting the timing and amount of fuel injection from a fuel injection valve (hereinafter sometimes referred to as an injector) according to the engine speed, amount of accelerator operation, coolant temperature, intake air temperature, etc.

As disclosed in Patent Literature 1 below, combustion of a diesel engine is mainly executed in the form of premixed combustion and diffusion combustion. When fuel injection from an injector into a combustion chamber is started, first, a combustible air-fuel mixture is generated due to evaporative diffusion of fuel (an ignition delay period). Next, this combustible air-fuel mixture undergoes self-ignition nearly simultaneously at several locations in the combustion chamber, and combustion progresses rapidly (premixed combustion). Further, the injection of fuel into the combustion chamber continues, so combustion is executed continuously (diffusion combustion). Thereafter, since unburnt fuel is still present after fuel injection is terminated, heat generation continues for a while (an afterburning period).

Meanwhile, in diesel engines, it is important to concurrently satisfy demands such as improving exhaust emissions by suppressing both the NOx generation amount and the smoke generation amount, reducing combustion noises generated during a combustion stroke, and ensuring sufficient engine torque.

For suppressing the NOx generation amount, an exhaust gas recirculation (EGR) apparatus that recirculates part of an exhaust gas in an intake path is known (for example, see Patent Literature 2 below). In such an EGR apparatus, the oxygen concentration in a cylinder is lowered by recirculating exhaust gas into the cylinder (combustion chamber) to promote the ignition delay and increase the proportion of premixed combustion, thereby suppressing NOx generation and improving exhaust emissions.

Also, there is a fuel injection technique for overcoming a shortage of oxygen in the combustion field in which fuel injection into the combustion chamber is divided (for example, divided into two parts), and the earlier first injection is executed in the form of premixed combustion. In such a fuel injection technique, bringing the injection timing of the later second injection close to the earlier first injection to use spray interactive cooling to the maximum extent makes it possible to suppress the NOx generation amount and the smoke generation amount and also makes it possible to suppress deterioration of fuel consumption (a fuel consumption rate). Note that spray interactive cooling refers to a phenomenon in which a spray of fuel injected in advance is cooled by an endothermic reaction with subsequently injected fuel.

### [Citation List]

### [Patent Literature]

[PTL 1] JP 2004-156519 A
[PTL 2] JP 2004-003415 A

### [Disclosure of Invention]

### [Technical Problems]

With combustion that utilizes spray interactive cooling as described above (combustion mainly composed of premixed combustion), it is possible to suppress the NOx generation amount, suppress the smoke generation amount, and suppress deterioration of fuel consumption. However, since it is a combustion in which initial ignition delay affects the combustion as a whole (poorly robust combustion), the combustion centroid is greatly retarded if the ignition delay in premixed combustion is increased when the pressure in the cylinder is lowered due to delay in supercharging by a supercharger during a transient operation or when the oxygen concentration in the cylinder is lowered due to, for example, delay in an operation for reducing the EGR amount, and it is thus likely that hydrocarbon (HC) is rapidly increased or misfire occurs. Also, when fuel having a low cetane rating is used, the ignition delay in premixed combustion is increased, and thus similar problems occur.

The present invention has been achieved in view of the above, and an object of the invention is to suitably use a combustion control apparatus for an internal combustion engine that is capable of reducing emissions and securing combustion stability also during a transition operation of the internal combustion engine or during use of fuel having a low cetane rating.

### [Means for Solving the Problems]

### - Principles of Solution -

According to a principle of the solution provided by the present invention for achieving the above object, in order to make it possible to use respective advantages of premixed combustion and diffusion combustion that are combustion forms in a combustion chamber, the centroid of the premixed combustion and the centroid of the diffusion combustion do not overlap with each other, and thus the premixed combustion and the diffusion combustion are separated for achieving an improvement of exhaust emissions and stabilization of combustion.

Note that the aforementioned combustion centroid refers to an instance at which the extent of combustion reaches "50%" when fuel injected into a combustion chamber (for example, fuel injected in fuel injection for premixed combustion or fuel injected in fuel injection for diffusion combustion) combusts in the combustion chamber, with the instance at which a complete combustion state in which the combustion of the entire fuel is completed being referred to as an extent of combustion of "100%". In other words, it refers to an instance at which the cumulative heat generation amount in the combustion chamber reaches "50%" relative to the heat generation amount obtained when the entire amount of injected fuel combusts.

### - Solving Means -

The present invention is premised on a combustion control apparatus for a compression self-ignition internal combustion engine in which fuel injected from a fuel injection valve into a combustion chamber is caused to combust in the combustion chamber by "premixed combustion" and "diffusion combustion" that is started after the "premixed combustion", and regarding such a combustion control apparatus of an internal combustion engine, and a technical feature is including an injection control means that adjusts a fuel injection form (a fuel injection pattern) of the fuel injection valve such that a combustion form in the combustion chamber is a combustion form in which a combustion centroid of the premixed combustion and a combustion centroid of the diffusion combustion are separated, and a minimum value of a heat generation rate between the two combustion centroids is smaller than a predetermined value.

In this way, the minimum value of the heat generation rate (the lowest peak of the heat generation rate waveform) between the combustion centroid of the premixed combustion and the combustion centroid of the diffusion combustion is made smaller than a predetermined value (specifically 10 [J/° CA]) to limit the overlapping heat generation rate between the premixed combustion and the diffusion combustion, and it is thus possible to separate the premixed combustion and the diffusion combustion.

In addition, with separated combustion in which the premixed combustion and the diffusion combustion are separated as described above, it is possible to secure combustion stability by the diffusion combustion that is separated from the premixed combustion while suppressing both the smoke generation amount and the NOx generation amount by the premixed combustion. Moreover, separating the premixed combustion and the diffusion combustion does not allow ignition delay in the earlier premixed combustion to influence the later diffusion combustion, thus making it possible to secure combustion stability even when ignition delay in the premixed combustion is increased during a transient operation of an internal combustion engine or during use of fuel having a low cetane rating.

Note that in this invention, a form of fuel injection by the fuel injection valve is made into a form that is capable of separately executing a first injection for mainly carrying out the "premixed combustion" and a second injection for mainly carrying out the "diffusion combustion" to achieve a combustion form in which the premixed combustion and the diffusion combustion are separated.

Also, in this invention, since the inside of the combustion chamber is not likely to be sufficiently preheated by the premixed combustion by the first injection and there is a concern of ignition delay in the diffusion combustion by the second injection if the combustion centroid of the premixed combustion and the combustion centroid of the diffusion combustion are excessively apart, in view of this point, the upper limit of the interval between the combustion centroid of the premixed combustion and the combustion centroid of the diffusion combustion is limited such that the ignition timing of the diffusion combustion is at a suitable timing.

Next, a specific example of this invention will now be described.

First, in this invention, the NOx generation amount may be suppressed by retarding the diffusion combustion. Specifically, the NOx generation amount may be restricted to a required value by, for example, retarding the diffusion combustion by retarding the injection timing of the second injection, which is for diffusion combustion, relative to the piston compression top dead center (TDC) in accordance with the required NOx amount required of the internal combustion engine. In this case, in accordance with the injection timing retardation of the second injection (retardation of diffusion combustion), the injection timing of the first injection, which is for premixed combustion, is adjusted such that the minimum value of the heat generation rate between the combustion centroid of the retarded diffusion combustion and the combustion centroid of the premixed combustion is smaller than a predetermined value (for example, 10 [J/° CA]).

To suppress the NOx generation mount as described above, it is sufficient that the injection timing of the second injection for diffusion combustion is retarded, but the more retarded the injection timing of the second injection for diffusion combustion, the more increased the combustion space and the lower the oxygen concentration, and smoke is thus likely to be generated. In other words, the travel distance of fuel droplets injected into the cylinder correlates with the oxygen concentration in the cylinder and the fuel injection amount, and even with the same fuel injection amount, the lower the oxygen concentration in the cylinder, the farther the travel distance of fuel droplets in the cylinder. Then, when the travel distance of fuel droplets in the cylinder is far, the effect of spray interactive cooling increases, and the proportion of premixed combustion components in diffusion combustion increases, and it is thus likely that smoke is generated. To suppress this, it is necessary to lessen the fuel injection amount of injection for diffusion combustion.

In view of this point, in this invention, the fuel injection amount of the second injection is adjusted in accordance with the injection timing of the second injection (retardation of diffusion combustion) to suppress smoke generation. Specifically, when retarding diffusion combustion by retarding the injection timing of the second injection in accordance with a required NOx amount, the amount of fuel that is combustible in the retarded diffusion combustion (the upper limit of the amount of fuel with which no smoke is generated in the retarded diffusion combustion) is regarded as the fuel injection amount of the second injection. Limiting the upper limit of the fuel injection amount of the second injection in this way does not allow fuel for diffusion combustion to be excessively injected, thus making it possible to suppress smoke generation in diffusion combustion.

Then, based on the fuel injection amount of the second injection and the total fuel injection amount (the total fuel injection amount necessary to obtain the required total torque), the fuel injection amount of the first injection for premixed combustion (Fuel injection amount of first injection = [Total fuel injection amount - Fuel injection amount of second injection]) is determined. At this time, if the fuel injection amount of the first injection is excessive, combustion noises are large, and in view of this point (an increase of combustion noises), the upper limit of the fuel injection amount of the first injection is limited. In this case, if the fuel injection amount of the first injection exceeds the upper-limit amount, the amount of exceeding fuel is injected after the second injection for diffusion combustion (after-injection) to secure torque generation.

In this invention, (a1) when the injection timing of the first injection needs to be greatly advanced relative to TDC (piston compression top dead center) such that the combustion centroid of the premixed combustion by the first injection and the combustion centroid of the premixed combustion by the second injection are separated and the minimum value of the heat generation rate between the two combustion centroids is less than a predetermined value (for example, 10 [J/° CA]), or (a2) when the first injection needs to be advanced relative to the TDC to increase the extent of premixed combustion in the premixed combustion by the first injection, an excessively advanced fuel injection timing of the first injection results in increased unburnt HC (hydrocarbon), and therefore, to prevent this, it is necessary to limit the amount of advancement of the first injection by a guard value. The advancement guard value is set in view of the amount of unburnt HC (hydrocarbon) generated. In this case, the advancement guard value for the amount of advancement of the injection timing of the first injection may be set so as to be variable according to the engine speed.

Note that, when the injection timing of the first injection is limited to the advancement guard value and a decrease correction needs to be performed on the fuel injection amount of the first injection, the decrease-corrected amount of the first injection (the amount of exceeding fuel) is injected in after-injection that is performed after the second injection to secure torque generation.

Also, the first injection may be divided injection in which injection is performed multiple times. Configuring the first injection as divided injection thus makes it possible to suppress unburnt HC caused by excessive diffusion.

Another means of the present invention for solving the problems is a combustion control apparatus for a compression self-ignition internal combustion engine in which fuel injected from a fuel injection valve into a combustion chamber is caused to combust in the combustion chamber by "premixed combustion" and "diffusion combustion" that is started after the "premixed combustion", and the form of fuel injection by the fuel injection valve is a form that is capable of separately executing a first injection for mainly carrying out the "premixed combustion" and a second injection for mainly carrying out the "diffusion combustion". It is possible to present a configuration in which an adjustment is made such that an interval between an injection end timing of the first injection and an injection start timing of the second injection is equal to or longer than the total period of an injection period of the first injection and an ignition delay period of combustion by the first injection.

In this invention also, it is possible that the combustion form in the combustion chamber is separated combustion in which premixed combustion and diffusion combustion are separated. That is, since the period of fuel injection into the combustion chamber in a diesel engine is proportional to the combustion period of "combustion" generated by this fuel injection, providing an interval that equals the injection period (combustion period) of the first injection plus the ignition delay period of the combustion by this first injection between the injection end timing of the first injection and the injection start timing of the second injection makes it possible achieve separated combustion in which the ignition delay of the premixed combustion does not influence the diffusion combustion.

Then, with separated combustion in which the premixed combustion by the first injection and the combustion by the second injection are separated as described above, it is possible to secure combustion stability by the diffusion combustion, which is separated from the premixed combustion, while suppressing both the smoke generation amount and the NOx generation amount by the premixed combustion. Moreover, separating the premixed combustion and the diffusion combustion does not allow ignition delay in the earlier premixed combustion to influence the later diffusion combustion as described above, thus making it possible to secure combustion stability even when ignition delay in the premixed combustion is increased during a transient operation of an internal combustion engine or during use of fuel having a low cetane rating.

Here, in this invention, the interval between the first injection and the second injection may be equal to the total period of the injection period of the first injection and the ignition delay period of combustion by the first injection or the interval may be set to be longer than the aforementioned total period. However, since the inside of the combustion chamber is not likely to be sufficiently preheated by the premixed combustion by the first injection and there is a concern of ignition delay in the diffusion combustion by the second injection if the interval is too long and the combustion centroid of the premixed combustion and the combustion centroid of the diffusion combustion are excessively apart when the interval between the first injection and the second injection is set to be longer than the aforementioned total period, and accordingly, in view of this point, the upper-limit value of the interval between the first injection and the second injection is limited such that the ignition timing of the diffusion combustion is at a suitable timing.

Next, a specific example of this invention will now be described.

In this invention also, the NOx generation amount may be suppressed by retarding diffusion combustion. Specifically, the NOx generation amount may be restricted to a required value by, for example, retarding the diffusion combustion by retarding the injection timing of the second injection for diffusion combustion relative to the piston compression top dead center (TDC) in accordance with the required NOx amount required of the internal combustion engine. In this case, in accordance with the injection timing retardation of the second injection, the injection timing of the first injection for premixed combustion is adjusted such that the interval between the second injection in which the injection timing is retarded and the first injection is longer than the aforementioned total period.

Here, to suppress the NOx generation mount as described above, it is sufficient that the injection timing of the second injection for diffusion combustion is retarded, but the more retarded the injection timing of the second injection for diffusion combustion, the more increased the combustion space and the lower the oxygen concentration, and smoke is thus likely to be generated. To suppress this, it is necessary to lessen the fuel injection amount of injection for diffusion combustion.

Therefore, in this invention also, the fuel injection amount of the second injection is adjusted in accordance with the injection timing of the second injection (retardation of diffusion combustion) to suppress smoke generation. Specifically, when retarding diffusion combustion by retarding the injection timing of the second injection in accordance with a required NOx amount, the amount of fuel that is combustible in the retarded diffusion combustion (the upper limit of the amount of fuel with which no smoke is generated in the retarded diffusion combustion) is regarded as the fuel injection amount of the second injection. Limiting the upper limit of the fuel injection amount of the second injection in this way does not allow fuel for diffusion combustion to be excessively injected, thus making it possible to suppress smoke generation in diffusion combustion.

Then, based on the fuel injection amount of the second injection and the total fuel injection amount (the total fuel injection amount necessary to obtain the required total torque), the fuel injection amount of the first injection for premixed combustion (Fuel injection amount of first injection = [Total fuel injection amount - Fuel injection amount of second injection]) is determined. At this time, if the fuel injection amount of the first injection is excessive, combustion noises are large, and in view of this point (an increase of combustion noises), the upper limit of the fuel injection amount of the first injection is limited. In this case, if the fuel injection amount of the first injection exceeds the upper-limit amount, the amount of exceeding fuel is injected after the second injection for diffusion combustion (after-injection) to secure torque generation.

In this invention, (b1) when the injection timing of the first injection needs to be greatly advanced relative to the piston compression top dead center (TDC) to separate the combustion centroid of the premixed combustion by the first injection and the combustion centroid of the diffusion combustion by the second injection (to enlarge the interval between the first injection and the second injection), or (b2) when the first injection needs to be advanced to increase the extent of premixed combustion in the premixed combustion by the first injection, an excessively advanced fuel injection timing of the first injection results in increased unburnt HC (hydrocarbon), and therefore, to prevent this, it is necessary to limit the amount of advancement of the first injection by a guard value. The advancement guard value is set in view of the amount of unburnt HC (hydrocarbon) generated. In this case, the advancement guard value for the amount of advancement of the injection timing of the first injection may be set so as to be variable according to the engine speed.

Note that, when the injection timing of the first injection is limited to the advancement guard value and a decrease correction needs to be performed on the fuel injection amount of the first injection, the decrease-corrected amount of the first injection (the amount of exceeding fuel) is injected in after-injection that is performed after the second injection to secure torque generation.

Also, the first injection may be divided injection in which injection is performed multiple times. Configuring the first injection as divided injection thus makes it possible to suppress unburnt HC caused by excessive diffusion.

### [Effects of the Invention]

According to the present invention, in an internal combustion engine in which premixed combustion and diffusion combustion are carried out in a combustion chamber, the premixed combustion and the diffusion combustion are separated by carrying out a control to limit the minimum value of the heat generation rate between the combustion centroid of the premixed combustion and the combustion centroid of the diffusion combustion, or carrying out a control to adjust the interval between the first injection for premixed combustion and the second injection for diffusion combustion, thus making it possible not to allow an influence of ignition delay in the earlier premixed combustion to affect the later diffusion combustion. Accordingly, it is possible to achieve a reduction of emissions and combustion stability also during a transient operation or during use of fuel that has a low cetane rating.

### [Brief Description of Drawings]

[FIG. 1]

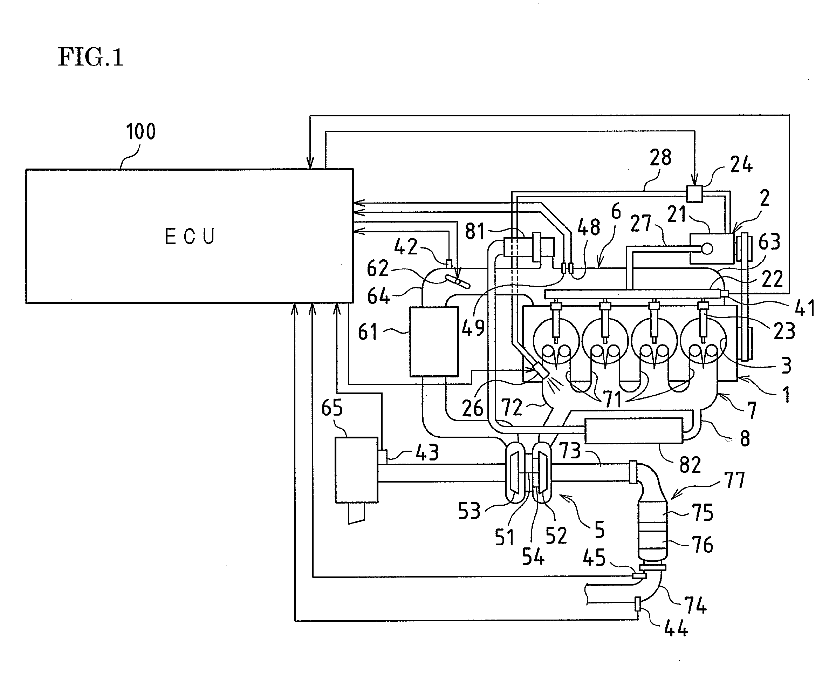

   FIG. 1 is a schematic configuration diagram of an engine to which the present invention is applied and a control system thereof.
[FIG. 2]

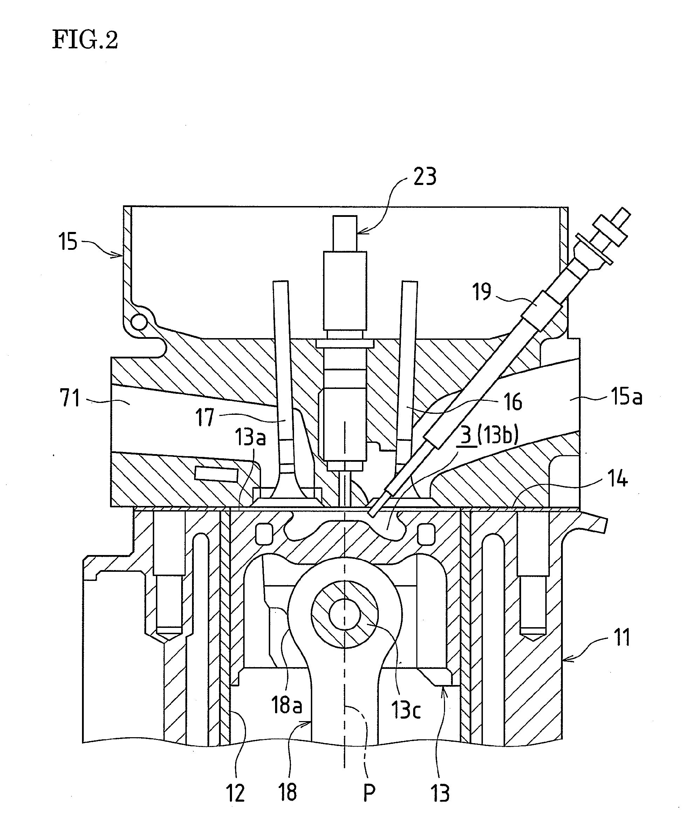

   FIG. 2 is a cross-sectional diagram showing the combustion chamber of a diesel engine and its surroundings.
[FIG. 3]

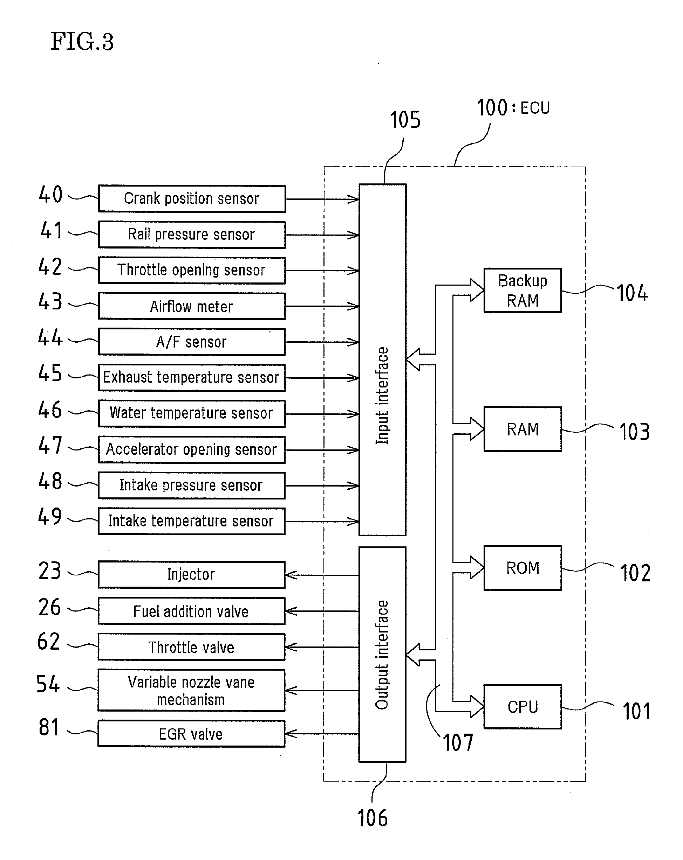

   FIG. 3 is a block diagram showing the configuration of a control system such as an ECU.
[FIG. 4]

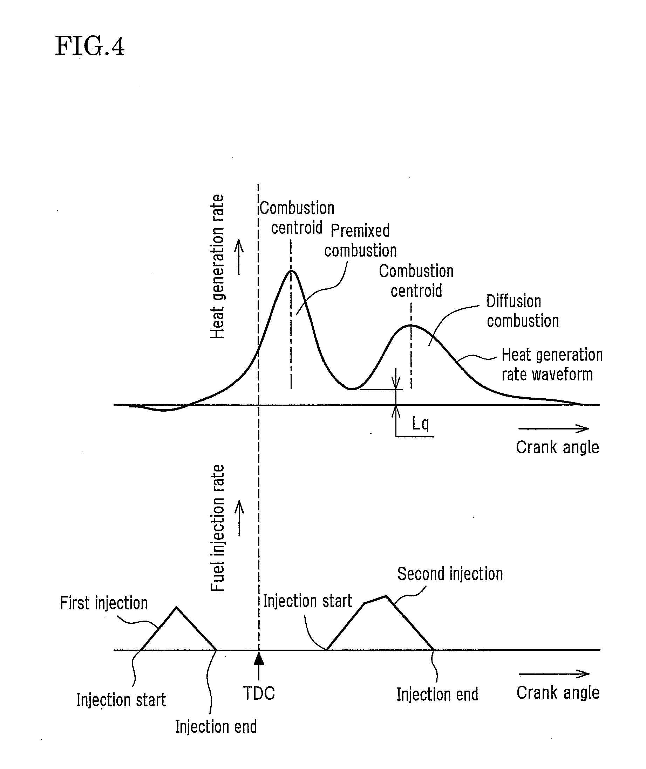

   FIG. 4 is a diagram showing a heat generation rate waveform when the combustion form is "separated combustion", and an example of a fuel injection pattern to obtain the heat generation rate waveform.
[FIG. 5]

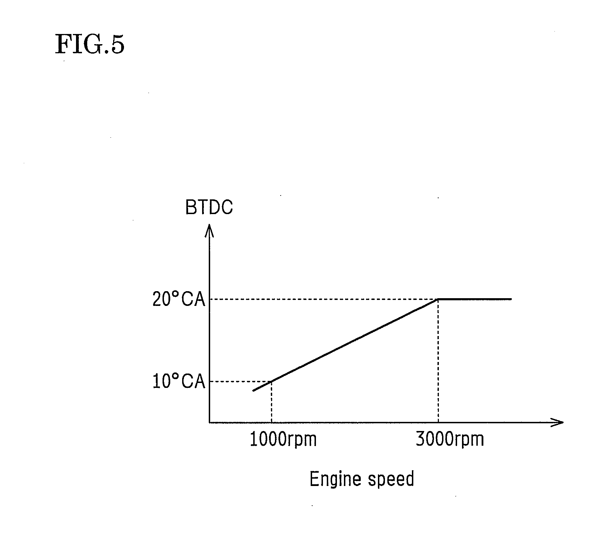

   FIG. 5 is a diagram showing a setting map for setting an advancement guard value of the first injection.
[FIG. 6]

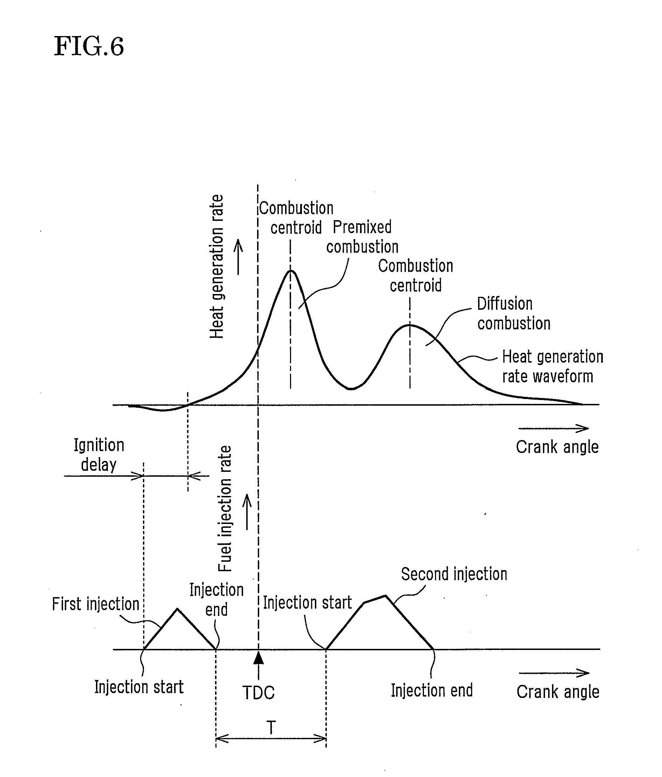

   FIG. 6 is a diagram showing a heat generation rate waveform when the combustion form is "separated combustion", and another example of a fuel injection pattern to obtain the heat generation rate waveform.
[FIG. 7]

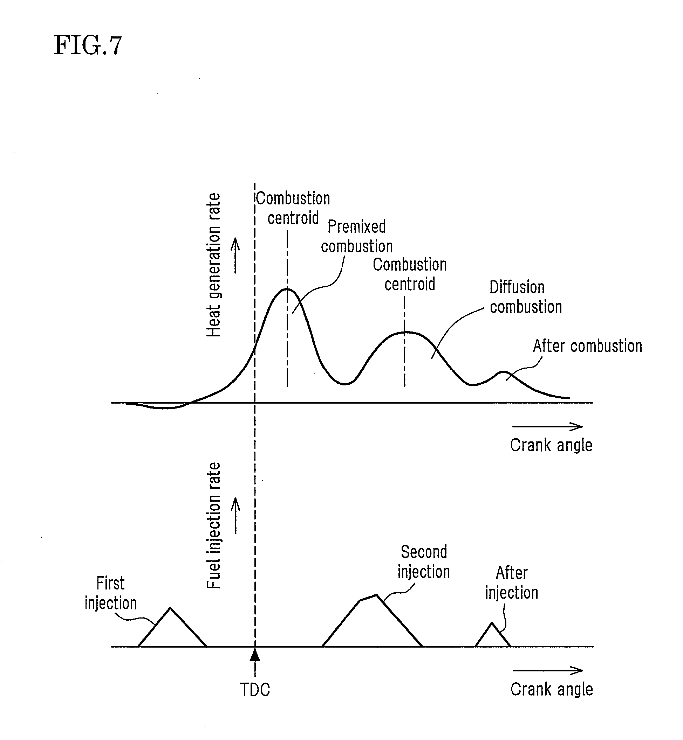

   FIG. 7 is a diagram showing a heat generation rate waveform when the combustion form is "separated combustion", and another example of a fuel injection pattern to obtain the heat generation rate waveform.
[FIG. 8]

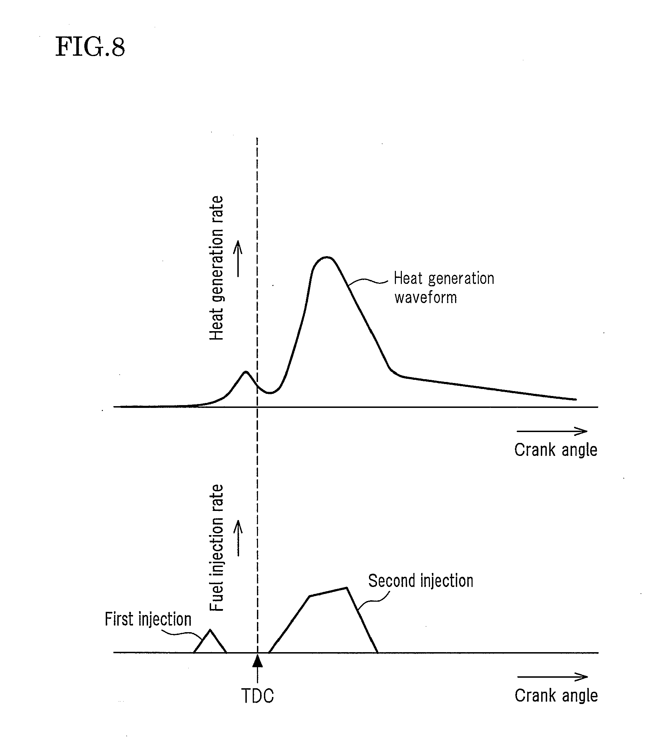

   FIG. 8 is a diagram showing a heat generation rate waveform when the combustion form is "diffusion combustion", and an example of a fuel injection pattern to obtain the heat generation rate waveform.
[FIG. 9]

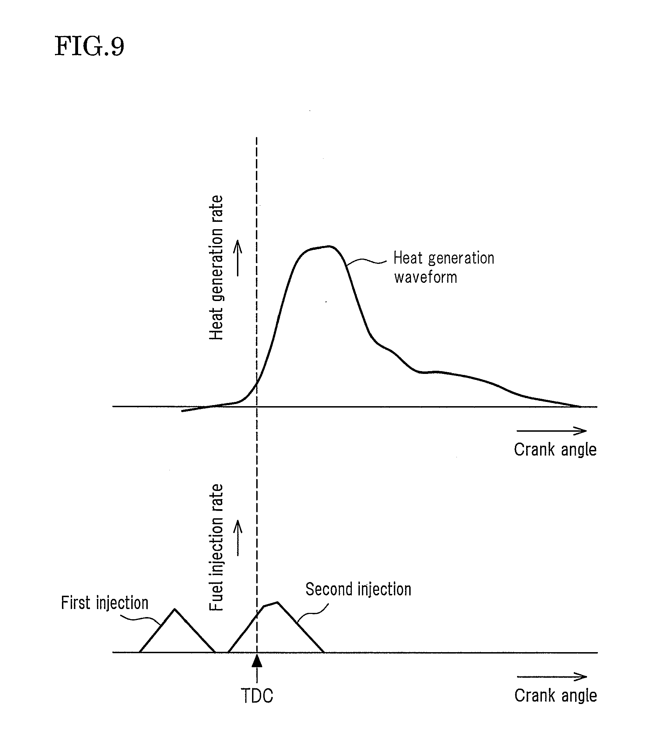

   FIG. 9 is a diagram showing a heat generation rate waveform when the combustion form is "combined combustion", and an example of a fuel injection pattern to obtain the heat generation rate waveform.

### [Mode for Carrying Out the Invention]

Embodiments of the present invention will now be described below with reference to the drawings. In the present embodiment, a case will be described in which the present invention is applied to a common rail in-cylinder direct injection multi-cylinder (for example, inline four-cylinder) diesel engine (compression self-igniting internal combustion engine) mounted in an automobile.

### - Engine configuration -

First, an example of a diesel engine (hereinafter simply referred to as an engine) to which the present invention is applied will now be described. FIG. 1 is a schematic configuration diagram of an engine 1 and a control system thereof. FIG. 2 is a cross-sectional diagram showing a combustion chamber 3 of the diesel engine and parts in the vicinity thereof.

As shown in FIG. 1, the engine 1 of this example is configured as a diesel engine system having a fuel supply system 2, combustion chambers 3, an intake system 6, an exhaust system 7, and the like as its main portions.

The fuel supply system 2 is provided with a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel supplied from the supply pump 21 is held (accumulated) at a specific pressure, and this accumulated fuel is distributed to each injector 23. The injectors 23 are configured from piezo injectors within which a piezoelectric element (piezo element) is provided, and supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled with an addition control operation by an ECU 100 that will be described later such that the amount of fuel added to the exhaust system 7 becomes a target addition amount (an addition amount such that exhaust A/F becomes target A/F), or such that a fuel addition timing becomes a specific timing. In other words, a desired amount of fuel is supplied from the fuel addition valve 26 by injection to the exhaust system 7 (to an exhaust manifold 72 from exhaust ports 71) at a suitable timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an airflow meter 43, and a throttle valve (intake air throttle valve) 62 are disposed in order from the upstream side. The airflow meter 43 outputs an electrical signal in accordance with the amount of air that flows into the intake path via the air cleaner 65.

The exhaust system 7 is provided with an exhaust manifold 72 connected to exhaust ports 71 formed in the cylinder head 15, and exhaust pipes 73, 74 that constitutes an exhaust path is connected to the exhaust manifold 72. Also, in this exhaust path a maniverter (exhaust purification apparatus) 77 is disposed that is provided with a NOx storage catalyst (NSR catalyst: NOx storage reduction catalyst) 75 and a diesel particulate-NOx reduction catalyst (DPNR catalyst) 76. Hereinafter, this NSR catalyst 75 and DPNR catalyst 76 will be described.

The NSR catalyst 75 is a storage reduction NOx catalyst and is configured using, for example, alumina (Al₂0₃) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

The NSR catalyst 75, in a state in which a large amount of oxygen is present in exhaust gas, stores NOx, and in a state in which the oxygen concentration in exhaust gas is low and a large amount of reduction component (for example, an unburned component of fuel (HC)) is present, reduces NOx to N0₂ or NO and releases the resulting N0₂ or NO. NOx that has been released as N0₂ or NO is further reduced due to quickly reacting with HC or CO in exhaust gas and becomes N₂. Also, by reducing N0₂ or NO, HC and CO themselves are oxidized and thus become H₂O and CO₂. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation to add fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (for example, an oxidization catalyst whose main component is a precious metal such as platinum) is supported on the DPNR catalyst 76.

Here, the combustion chamber 3 of the diesel engine and parts in the vicinity of the combustion chamber 3 will now be described with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

Note that the shape of this cavity 13b is such that the recess size of its center portion (on a cylinder centerline P) is small, and the recess size is increased toward the peripheral side. That is, as shown in FIG. 2, when the piston 13 is near the compression top dead center, the combustion chamber 3 formed by this cavity 13b is configured such that the combustion chamber is a narrow space having a relatively small volume at the center portion, and the space is gradually increased toward the peripheral side (has an enlarged space).

A small end 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crank shaft. Also, a glow plug 19 is disposed so as to face the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug 19.

In the cylinder head 15, the intake port 15a that introduces air into the combustion chamber 3 and the exhaust port 71 that discharges exhaust gas from the combustion chamber 3 are formed, and an intake valve 16 that opens/closes the intake port 15a and an exhaust valve 17 that opens/closes the exhaust port 71 are disposed. The intake valve 16 and the exhaust valve 17 are disposed facing each other on either side of a cylinder center line P. That is, the engine 1 of this example is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder center line P, and injects fuel introduced from the common rail 22 toward the combustion chamber 3 at a specific timing.

Furthermore, as shown in FIG. 1, the engine 1 is provided with a supercharger (turbocharger) 5. This turbocharger 5 is equipped with a turbine wheel 52 and a compressor impeller 53 that are linked via a turbine shaft 51. The compressor impeller 53 is disposed so as to face the inside of the intake pipe 64, and the turbine wheel 52 is disposed so as to face the inside of the exhaust pipe 73. Thus the turbocharger 5 uses exhaust flow (exhaust pressure) received by the turbine wheel 52 to rotate the compressor impeller 53, thereby performing a so-called supercharging operation that increases the intake pressure. The turbocharger 5 of this example is a variable nozzle-type turbocharger (VNT), in which a variable nozzle vane mechanism 54 is provided on the turbine wheel 52 side, and by adjusting the opening of this variable nozzle vane mechanism 54 (VN opening), it is possible to adjust the supercharging pressure of the engine 1.

An intercooler 61 for forcibly cooling intake air heated due to supercharging with the turbocharger 5 is provided in the intake pipe 64 of the intake system 6. The throttle valve 62 is provided further downstream relative to this intercooler 61. The throttle valve 62 is an electronically controlled opening/closing valve whose opening is capable of stepless adjustment, and has a function to constrict the area of the channel of intake air under specific conditions, and thus adjust (reduce) the amount of intake air supplied.

Also, the engine 1 is provided with an exhaust gas recirculation path (EGR path) 8 that connects the intake system 6 and the exhaust system 7. The EGR path 8 decreases the combustion temperature by appropriately directing part of the exhaust gas back to the intake system 6 and resupplying that exhaust gas to the combustion chamber 3, thus reducing the NOx generation amount. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR device (exhaust gas recirculating device) is configured with this EGR path 8, EGR valve 81, EGR cooler 82, and the like.

### - Sensors -

Various sensors are installed at respective sites of the engine 1, and these sensors output signals related to environmental conditions at the respective sites and the operating state of the engine 1.

For example, the airflow meter 43 outputs a detection signal in accordance with the flow rate of intake air (the amount of intake air) on the upstream side of the throttle valve 62 within the intake system 6. An intake temperature sensor 49 is disposed in the intake manifold 63 and outputs a detection signal in accordance with the temperature of intake air. An intake pressure sensor 48 is disposed in the intake manifold 63 and outputs a detection signal in accordance with the intake air pressure. An A/F (air-fuel ratio) sensor 44 outputs a detection signal that continuously changes in accordance with the oxygen concentration in exhaust gas on the downstream side of the maniverter 77 of the exhaust system 7. An exhaust temperature sensor 45 likewise outputs a detection signal in accordance with the temperature of exhaust gas (exhaust temperature) on the downstream side of the maniverter 77 of the exhaust system 7. A rail pressure sensor 41 outputs a detection signal according to the pressure of fuel (hereinafter sometimes referred to as fuel pressure) accumulated in the common rail 22. A throttle opening sensor 42 detects the opening of the throttle valve 62.

### -ECU-

As shown in FIG. 3, the ECU 100 is provided with a CPU 101, a ROM 102, a RAM 103, a backup RAM 104, and the like. In the ROM 102, various control programs, maps that are referred to when executing such various control programs, and the like are stored. The CPU 101 executes various computational processes based on the various control programs and maps stored in the ROM 102. The RAM 103 is a memory that temporarily stores data resulting from computation with the CPU 101 or data that has been input from the respective sensors. The backup RAM 104 is a nonvolatile memory that stores such data or the like to be saved when the engine 1 is stopped.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal in accordance with the coolant temperature of the engine 1, an accelerator position sensor 47 that outputs a detection signal in accordance with the amount of accelerator pedal depression, a crank position sensor 40 that outputs a detection signal (pulse) each time the output shaft (crankshaft) of the engine 1 rotates a specific angle, and the like.

On the other hand, the output interface 106 is connected to the injectors 23, the fuel addition valve 26, the throttle valve 62, the variable nozzle vane mechanism 54, the EGR valve 81, and the like.

The ECU 100 executes various controls of the engine 1 based on the output of the aforementioned various sensors. For example, the ECU 100 executes fuel injection control of the injector 23. As the fuel injection control of this injector 23, control of divided injection, which will be described below, is executed.

The total fuel injection amount in this divided injection is set as a necessary fuel injection amount for obtaining the required total torque that is determined in accordance with the operating state, such as engine speed, amount of accelerator operation, coolant temperature, and intake air temperature, as well as environmental conditions. For example, the greater the engine speed (the engine speed calculated based on the value detected by the crank position sensor 40) or the greater the amount of accelerator operation (the amount of accelerator pedal depression detected by the accelerator position sensor 47) (i.e., the greater the accelerator opening), the greater the resulting torque demand value of the engine 1.

### - Fuel injection pressure -

The fuel injection pressure when executing the divided injection is decided in accordance with the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. Note that this target rail pressure is set in accordance with a fuel pressure setting map stored in, for example, the ROM 102. That is, deciding the fuel pressure according to this fuel pressure setting map allows the valve opening period (injection rate waveform) of the injectors 23 to be controlled, and it is thus possible to specify the fuel injection amount during that valve opening period. Note that in this embodiment, the fuel pressure is adjusted in accordance with the engine load or the like so as to be between 30 MPa and 200 MPa.

The optimum values of fuel injection parameters for the divided injection differ according to the temperature conditions of the engine 1, intake air, and the like.

For example, the ECU 100 adjusts the amount of fuel discharged by the supply pump 21 such that the common rail pressure becomes the same as the target rail pressure set based on the engine operating state, i.e., such that the fuel injection pressure matches the target injection pressure. Also, the ECU 100 decides the amount of fuel to be injected and the form of fuel injection based on the engine operating state. Specifically, the ECU 100 calculates engine revolutions (engine rotational speed) based on the value detected by the crank position sensor 40, obtains an amount of accelerator pedal depression (accelerator opening degree) based on the value detected by the accelerator opening sensor 47, and decides the total fuel injection amount (fuel injection amount in the divided injection) based on the engine rotational speed, the accelerator opening, and the like.

### - Penetration -

Here, the relationship between fuel injection amount and penetration will now be described. In the injector 23, when fuel injection is started in response to an injection command signal, a needle that blocks the nozzle retreats from the nozzle, thus gradually increasing the nozzle opening area. When the needle moves to the farthest retreating position, the largest nozzle opening area is reached. However, if the injection command signal is canceled before the needle reaches the farthest retreating position (if a valve closing command is received), the needle moves forward in a valve closing direction in the middle of the retreating movement. That is, in this case, fuel injection is terminated without reaching the largest nozzle opening area. Therefore, the longer the injection period is set, the larger the nozzle opening area attained.

The nozzle opening area correlates with the travel distance of fuel (spray) injected from the nozzle. That is, when fuel is injected while the nozzle opening area is large, the size of a fuel droplet injected from the nozzle is also large, and thus the kinetic energy is also large (penetration is large). Therefore, the travel distance of this fuel droplet is long. On the other hand, when fuel is injected while the nozzle opening area is small, the size of a fuel droplet injected from the nozzle is also small, and thus the kinetic energy is also small (penetration is small). Therefore, the travel distance of this fuel droplet is short.

When the valve opening period of the injector 23 is set to be relatively long (in other words, when the injection amount per injection is set to be relatively large), the needle moves to the farthest retreating position and therefore the largest nozzle opening area is reached, and the travel distance of the fuel droplet in this case is long. That is, most of the fuel injected from the injector 23 is capable of traveling to near the peripheral edge of the cavity 13b. However, there is also a restriction due to the shape of the combustion chamber on the travel distance of the fuel droplet injected from the injector 23, and therefore, there is a limit to the travel distance of the fuel droplet.

On the other hand, when the valve opening period of the injector 23 is set to be relatively short (in other words, when the injection amount per injection is set to be relatively small), the needle does not move to the farthest retreating position and the nozzle opening area is small, and therefore the travel distance of the fuel droplet in this case is short. That is, most of the fuel injected from the injector 23 is capable of traveling no farther than the central portion of the cavity 13b.

As described above, the nozzle opening area determined by the valve opening period of the injector 23 and the travel distance of fuel (spray) injected from the nozzle correlate with each other. Accordingly, the larger the first injection (fuel injection for mainly carrying out premixed combustion), which will be described below, is set, the longer the travel distance of fuel, and fuel travels to near the peripheral edge of the cavity 13b, and the rate of encounter with oxygen in the combustion chamber 3 is maintained at a high level, thus making it possible to overcome a shortage of oxygen. Accordingly, the smoke generation amount can be suppressed. That is, the larger the fuel injection amount in the first injection is set, the larger the space in the combustion chamber 3 the fuel is injected into. Therefore, combustion is performed without resulting in an oxygen shortage, and it is thus possible to suppress the smoke generation amount.

### - Divided injection -

Next, divided injection executed in this embodiment will now be described.

First, in the diesel engine 1, it is important to concurrently satisfy demands such as improving exhaust emissions by suppressing the NOx generation amount and the smoke generation amount, reducing combustion noises during a combustion stroke, and ensuring sufficient engine torque. As a technique of concurrently satisfying these demands, in this embodiment, fuel injection into the combustion chamber 3 is carried out in the form of divided injection in which injection is divided into first injection and second injection. Note that, as described below, in this embodiment, in addition to the first injection and the second injection, after-injection (divided injection) may be carried out after the second injection.

FIGS. 8 and 9 show examples of combustion forms ("diffusion combustion" and "combined combustion") attained when fuel injection into the combustion chamber of the diesel engine is divided into 2 parts, i.e., the first injection and the second injection.

The combustion form shown in FIG. 8 is an example of "diffusion combustion" in which large part of combustion by the first injection is premixed combustion, and combustion by the first injection performs preheating, and combustion by the second injection is diffusion combustion. In this way, combustion as a whole is "diffusion combustion", and it is thus possible to stably carry out combustion in the combustion chamber 3 and to obtain a sufficient output during high-load traveling in which stable combustion is particularly required.

The combustion form shown in FIG. 9 is an example of "combined combustion", which is combustion that uses spray interactive cooling to a maximum extent by increasing the fuel injection amount of the first injection and carrying out the second injection so as to be close to the first injection. In such "combined combustion", carrying out premixed combustion in which ignition delay in combustion by the first injection is increased makes it possible to suppress both the smoke generation amount and the NOx generation amount and suppress deterioration of fuel consumption.

Meanwhile, "diffusion combustion" as shown in FIG. 8" is problematic in that although it is possible to achieve stable combustion and secure sufficient engine torque, the NOx generation amount is increased due to an excessively large proportion of diffusion combustion in the combustion in the combustion chamber.

In contrast, with "combined combustion" as shown in FIG. 9, the combustion period can be shortened and the combustion is thus efficient, and in addition, the effect of reducing the oxygen concentration in the cylinder brought about by increased premixed combustion components makes it possible to suppress the smoke generation amount and the NOx generation amount. However, delay in fuel ignition by the first injection induces ignition delay in combustion by the second injection, thus creating ignition delay in combustion as a whole, and resulting in fuel having poor robustness (stability). Accordingly, the combustion centroid is greatly retarded when the pressure in the cylinder is lowered due to delay in supercharging by a supercharger during a transient operation or when the oxygen concentration in the cylinder is lowered due to, for example, delay in an operation for reducing the EGR amount, and it is thus likely that HC (hydrocarbon) is rapidly increased or misfire occurs. Also, when fuel having a low cetane rating is used, ignition delay in premixed combustion is increased, and thus similar problems occur.

Accordingly, this embodiment has a feature in that combustion by the first injection is premixed combustion, combustion by the second injection is diffusion combustion, and combustion (separated combustion) in which the premixed combustion and the diffusion combustion are separated is carried out to use the respective advantages of the premixed combustion and the diffusion combustion for an improvement of exhaust emissions and stabilization of combustion. Specific control examples thereof ([Embodiment 1] and [Embodiment 2]) will now be described below.

### [Embodiment 1]

A feature of this embodiment is that, as shown in FIG. 4, the combustion centroid of the premixed combustion and the combustion centroid of the diffusion combustion are separated and controlled such that a minimum value Lq of the heat generation rate (the lowest peak of the heat generation rate waveform) between the two combustion centroids is smaller than a predetermined value (specifically, 10 [J/° CA]) to limit the overlapping heat generation rate between the premixed combustion and the diffusion combustion, and thereby the premixed combustion and the diffusion combustion are separated.

With separated combustion in which the premixed combustion by the first injection and the diffusion combustion by the second injection are separated as described above, it is possible to secure combustion stability by the diffusion combustion, which is separated from the premixed combustion, while suppressing both the smoke generation amount and the NOx generation amount by the premixed combustion. Moreover, separating the premixed combustion and the diffusion combustion does not allow ignition delay in the earlier premixed combustion to influence the later diffusion combustion, thus making it possible to secure combustion stability even when ignition delay in the premixed combustion is increased during a transient operation of an internal combustion engine or during use of fuel having a low cetane rating.

Note that controlling a fuel injection form (a fuel injection pattern) such that the overlapping heat generation rate Lq between the premixed combustion and the diffusion combustion is smaller than 10 [J/° CA] makes it possible to achieve separated combustion in which ignition delay in the earlier premixed combustion does not influence the later diffusion combustion.

Here, the diffusion combustion by the second injection will now be described. First, in this embodiment, the second injection is executed while preheating inside the combustion chamber 3 has been sufficiently achieved by the premixed combustion by the first injection as described above, and thus fuel injected in the second injection into the combustion chamber 3 undergoes thermal decomposition by being immediately exposed to a temperature environment having a temperature equal to or higher than the self-igniting temperature, and combustion starts immediately after injection.

Specifically, fuel ignition delay in a diesel engine includes physical delay and chemical delay. Physical delay refers to the time it takes fuel droplets to evaporate/mix, and depends on the gas temperature in the combustion field. On the other hand, chemical delay refers to a time necessary for fuel vapor to chemically bond/ decompose and oxidatively produce heat. In a condition in which preheating inside the combustion chamber has been sufficiently achieved by premixed combustion by the first injection as described above, such physical delay is minimized, and as a result, ignition delay also is minimized. Therefore, in the combustion form of fuel injected by the second injection, hardly any premixed combustion is carried out, and large part is diffusion combustion. Adjusting the injection timing and the injection amount of the second injection makes it possible to concurrently control the ignition timing in diffusion combustion, the extent of change of heat generation rate (the gradient of a heat generation rate waveform), the peak of a heat generation rate, and the time to reach the combustion centroid.

Also, retarding the injection timing of the second injection for diffusion combustion relative to the TDC (the compression top dead center of the piston 13) to retard the diffusion combustion (retard the combustion centroid of diffusion combustion) makes it possible to suppress the NOx generation amount. However, the more retarded the injection timing of the second injection for diffusion combustion, the more increased the combustion space and the lower the oxygen concentration, and smoke is thus likely to be generated. To suppress this, it is necessary to lessen the fuel injection amount of injection for diffusion combustion. Accordingly, in this embodiment, the fuel injection amount of the second injection is adjusted in accordance with retardation of the injection timing of the second injection for diffusion combustion (retardation of diffusion combustion) to suppress smoke generation. A specific technique thereof will be described below.

### - Specific control procedure -

Next, a specific control procedure when executing fuel injection from the injector 23 with an adjustment of the fuel injection pattern of divided injection (the injection timing/fuel injection amount of the first injection for premixing and the injection timing/fuel injection amount of the second injection for diffusion combustion) as described above will now be described with reference to FIG. 4. Note that the processing described below is executed by the ECU 100.

[S11] As described above, the total fuel injection amount (the total fuel injection amount necessary to obtain required torque) of divided injection is obtained in accordance with the operating state, such as engine speed, amount of accelerator operation, coolant temperature, and intake air temperature, as well as environmental conditions in reference to, for example, a known map.

[S12] A retardation value (a retardation value relative to the TDC) of the injection timing (the injection start timing) of the second injection relative to the TDC (the compression top dead center of the piston 13) is determined in reference to a map based on a required NOx amount [g/h] required of the engine 1. The retardation value map is to set the retardation value of the injection timing of the second injection for diffusion combustion using a required NOx amount as a parameter, and is created in advance through experimentation/simulation and stored on, for example, the ROM 102 of the ECU 100. The retardation value map is configured such that the smaller the required NOx amount, the larger the retardation value of the injection timing (the injection start timing) of the second injection. However, misfire occurs when retardation of the diffusion combustion by the second injection for diffusion combustion is excessively large, and to prevent this, the upper limit of the second injection on the retardation side is limited.

Note that when mixfire is prevented in this manner, retardation of the second injection may be limited using as a retardation guard value an injection timing with which the combustion centroid of the diffusion combustion by the second injection is at a BTDC (after the top dead center of the piston 13) of 20° CA (crank angle). Also, when a priority is given to combustion efficiency, retardation of the second injection may be limited using as a retardation guard value an injection timing with which the combustion centroid of the combustion by the second injection is at a BTDC of 15° CA.

[S13] Based on the retardation value of the injection timing of the second injection determined in the processing [S12] above, an amount of fuel combustible in diffusion injection by fuel injection with this retardation value (the upper limit of the amount of fuel with which no smoke is generated in retarded diffusion combustion) is obtained from a map, and the upper-limit fuel amount is regarded as the fuel injection amount of the second injection. Moreover, based on the fuel injection amount of the second injection and injection characteristics of the injector 23 (such as an injection amount per unit time), the injection period (from an injection start timing to an injection end timing) of the second injection shown in FIG. 4 is determined.

An upper-limit fuel amount map used for this processing is created by obtaining in advance the upper-limit value of the amount of fuel with which no smoke is generated in diffusion combustion (the amount of fuel combustible in retarded diffusion combustion) through experimentation/simulation or the like using the retardation value of the injection timing of the second injection as a parameter and mapping values (upper-limit fuel amounts) fitted based on the results, and is stored on, for example, the ROM 102 of the ECU 100. The upper-limit fuel amount map is configured such that the greater the retardation value of the injection timing of the second injection, the smaller the upper-limit fuel amount in diffusion combustion.

[S14] Using the total fuel injection amount obtained in the processing [S11] above and the fuel injection amount of the second injection determined in the processing [S13] above, the fuel injection amount of the first injection (Fuel injection amount of first injection = [Total fuel injection amount - Fuel injection amount of second injection]) is calculated.

At this time, whether the calculated fuel injection amount of the first injection is greater than the upper-limit amount or not is determined, and if the fuel injection amount of the first injection is equal to or less than the upper-limit amount, the value calculated in the above-described processing as-is is regarded as the fuel injection amount of the first injection. On the other hand, the calculated fuel injection amount of the first injection is greater than the upper-limit amount, the amount exceeding the upper-limit amount (the amount of exceeding fuel) is injected in after-injection that is performed after the second injection as shown in, for example, FIG. 7 to secure torque generation. Note that the upper-limit amount of the fuel injection amount of the first injection is a value (an upper-limit amount) fitted in view of a threshold value (an acceptable value) of combustion noises that are generated in accordance with the fuel injection amount of the first injection.

[S15] Based on the injection timing (the retardation value of the injection start timing)/fuel injection amount of the second injection and the fuel injection amount of the first injection obtained in the processings [S11] to [S14] above, the combustion centroid of premixed combustion and the combustion centroid of diffusion combustion are separated as shown in, for example, FIG. 4, and the injection timing (the injection start timing) of the first injection is determined such that the minimum value Lq of the heat generation rate between the two combustion centroids is smaller than 10 [J/° CA].

Specifically, based on the injection timing (the retardation value of the injection start timing)/fuel injection amount of the second injection and the fuel injection amount of the first injection obtained in the respective processings [S11] to [S14] described above, the injection start timing of the first injection is calculated with reference to a map that will be described below. Moreover, based on the fuel injection amount of the first injection and injection characteristics of the injector 23 (such as an injection amount per unit time), the injection period (from an injection start timing to an injection end timing) of the first injection shown in FIG. 4 is dicided.

At this time, whether the injection start timing (a calculated value) of the first injection is on the retardation side or on the advancement side relative to an advancement guard value that will be described below is determined, and if the injection start timing of the first injection is on the retardation side relative to the advancement guard value, the injection start timing and the injection end timing of the first injection calculated in the above-described processing are used as-is, and a fuel injection pattern as shown in FIG. 4 is determined. Note that when the injection timing (a calculated value) of the first injection is on the retardation side relative to the advancement guard value, the injection timing of the first injection may be advanced to the advancement guard value in order to increase the extent of premixing in the premixed combustion by the first injection.

On the other hand, when the injection start timing (a calculated value) of the first injection is on the advancement side relative to the advancement guard value, the injection timing of the first injection is limited to the advancement guard value. At this time, if a decrease correction needs to be performed on the fuel injection amount of the first injection, the decrease-corrected amount of the first injection (the amount of exceeding fuel) is injected in after-injection that is performed after the second injection as shown in, for example, FIG. 7 to secure torque generation.

Then, executing fuel injection from the injector 23 based on the fuel injection pattern determined in the above-described manner (see FIG. 4 or FIG. 7) makes it possible to achieve combustion having a heat generation rate waveform as shown in FIG. 4 or FIG. 7, i.e., separated combustion in which premixed combustion and diffusion combustion are separated.

### (Injection timing setting map for first injection)

An injection start timing setting map used for the processing [S15] above is created by obtaining in advance the injection start timing of the first injection such that the minimum value Lq of the heat generation rate between the combustion centroids of premixed combustion and diffusion combustion shown in FIG. 4 is smaller than 10 [J/° CA] through experimentation/simulation or the like using the injection start timing/fuel injection amount of the second injection and the fuel injection amount of the first injection as parameters and mapping values (injection start timings of the first injection) fitted based on the results, and is stored on, for example, the ROM 102 of the ECU 100.

Note that in the heat generation rate waveform shown in FIG. 4, the inside of the combustion chamber is not likely to be sufficiently preheated by the premixed combustion by the first injection and there is a concern of ignition delay in the diffusion combustion by the second injection if the combustion centroid of the premixed combustion and the combustion centroid of the diffusion combustion are excessively apart, and accordingly, in view of this point, the map according to which the injection start timing of the first injection is obtained is created such that the ignition timing of the diffusion combustion is at a suitable timing.

### (Advancement guard value)

The advancement guard value of the first injection is obtained with reference to the map shown in FIG. 5 based on the engine speed calculated from a value detected by the crank position sensor 40. The map in FIG. 5 is obtained in advance by mapping values empirically fitted from advancement guard values through experimentation/simulation or the like using the engine speed as a parameter, and is stored on, for example, the ROM 102 of the ECU 100.

As described above, according to this embodiment, in the engine 1 in which the premixed combustion and the diffusion combustion are carried out in the combustion chamber, the fuel injection pattern is adjusted so as to attain a combustion form in which the combustion centroid of the premixed combustion and the combustion centroid of the diffusion combustion are separated and the minimum value of the heat generation rate between the two combustion centroids is smaller than a predetermined value, and it is thus possible to achieve separated combustion in which the premixed combustion and the diffusion combustion are separated. Accordingly, it is possible to use the respective advantages of the premixed combustion and the diffusion combustion, thus enabling an improvement of exhaust emissions and combustion stability to be achieved. That is, as described above, it is possible that, while both the smoke generation amount and the NOx generation amount are suppressed by the premixed combustion, combustion stability is secured by the diffusion combustion that is separate from the premixed combustion. Moreover, separating the premixed combustion and the diffusion combustion does not allow ignition delay in the earlier premixed combustion to influence the later diffusion combustion, thus making it possible to secure combustion stability even when ignition delay in the premixed combustion is increased during a transient operation of an internal combustion engine or during use of fuel having a low cetane rating.

Moreover, in this embodiment, the injection timing of the second injection is retarded in accordance with a required NOx amount (diffusion combustion is retarded), and the fuel injection amount of the second injection is limited to an amount of fuel that is combustible in retarded diffusion combustion. It is therefore possible that, while smoke generation is suppressed, the NOx amount is restricted to a value as required.

Note that, in this embodiment, the first injection may be divided injection in which injection is performed multiple times. Configuring the first injection as divided injection thus makes it possible to suppress unburnt HC caused by excessive diffusion.

### [Embodiment 2]

In this embodiment, as shown in FIG. 6, the fuel injection pattern (the fuel injection form) is adjusted such that an interval T between the injection end timing of the first injection for premixed combustion and the injection start timing of the second injection for diffusion combustion is longer than the total period of the injection period (from injection start to injection end) of the first injection and the ignition delay period of combustion by the first injection, thus making the combustion relationship between the premixed combustion by the first injection and the combustion by the second injection distant (making the combustion by the first injection not influence the combustion by the second injection).

With such a fuel injection pattern, it is possible not to allow an influence of the ignition delay in the premixed combustion by the first injection to affect the diffusion combustion by the second injection. That is, in a diesel engine, since the period of fuel injection into the combustion chamber is proportional to the combustion period of "combustion" generated by this fuel injection, providing the interval T that equals the injection period (the combustion period) of the first injection plus the ignition delay period of the combustion by this first injection between the injection end timing of the first injection and the injection start timing of the second injection makes it possible not to allow ignition delay in the combustion by the first injection to influence the combustion (the diffusion combustion) by the second injection even when ignition delay in the combustion by the first injection is increased.

Then, with separated combustion in which the premixed combustion by the first injection and the diffusion combustion by the second injection are separated as described above, it is possible to secure combustion stability by the diffusion combustion, which is separated from the premixed combustion, while suppressing both the smoke generation amount and the NOx generation amount by the premixed combustion. Moreover, separating the premixed combustion and the diffusion combustion does not allow ignition delay in the earlier premixed combustion to influence the later diffusion combustion, thus making it possible to secure combustion stability even when ignition delay in the premixed combustion is increased during a transient operation of an internal combustion engine or during use of fuel having a low cetane rating.

Note that, it can be said that in this embodiment also, characteristics of the diffusion combustion by the second injection (the ignition timing, extent of change of heat generation rate (gradient of the heat generation rate waveform), peak of the heat generation rate, timing at which the combustion centroid is reached, and retardation of diffusion combustion) are the same as those described in [Embodiment 1], and thus detailed descriptions thereof are omitted.

### - Specific control procedure -

A specific control procedure when executing fuel injection from the injector 23 with an adjustment of the fuel injection pattern of divided injection (the interval T between the first injection and the second injection) as described above will now be described with reference to FIG. 6. Note that the processing described below can be executed by the ECU 100.

[S21] As described above, the total fuel injection amount (the total fuel injection amount necessary to obtain required torque) of divided injection is obtained in accordance with the operating state, such as engine speed, amount of accelerator operation, coolant temperature, and intake air temperature, as well as environmental conditions in reference to, for example, a known map.

[S22] Based on the required NOx amount [g/h] required of the engine 1, the retardation value of the injection timing (the retardation value of the injection start timing) of the second injection shown in FIG. 6 is determined by the same processing as in [S12] of [Embodiment 1] described above.

[S23] Based on the retardation value of the injection timing of the second injection determined in the processing [S22] above, an amount of fuel that is combustible in diffusion injection by fuel injection with the retardation value (the upper limit of the amount of fuel with which no smoke is generated in retarded diffusion combustion) is obtained by the same processing as in [S13] of [Embodiment 1], and the upper-limit fuel amount is regarded as the fuel injection amount of the second injection. Moreover, based on the fuel injection amount of the second injection and injection characteristics of the injector 23 (such as an injection amount per unit time), the injection period (from an injection start timing to an injection end timing) of the second injection shown in FIG. 6 is determined.

[S24] Using the total fuel injection amount obtained in the processing [S21] above and the fuel injection amount of the second injection obtained in the processing [S23] above, the fuel injection amount of the first injection (Fuel injection amount of first injection = [Total fuel injection amount - Fuel injection amount of second injection]) is calculated.

At this time, whether the calculated fuel injection amount of the first injection is greater than the upper-limit amount or not is determined, and if the fuel injection amount of the first injection is equal to or less than the upper-limit amount, the value calculated in the above-described processing as-is is regarded as the fuel injection amount of the first injection. On the other hand, the calculated fuel injection amount of the first injection is greater than the upper-limit amount, the amount exceeding the upper-limit amount (the amount of exceeding fuel) is injected in after-injection that is performed after the second injection as shown in, for example, FIG. 7 to secure torque generation. Note that the upper-limit amount of the fuel injection amount of the first injection is a value (an upper-limit amount) fitted in view of a threshold value (an acceptable value) of combustion noises that are generated in accordance with the fuel injection amount of the first injection.

[S25] Based on the fuel injection amount of the first injection obtained in [S24] above and injection characteristics (such as the injection amount per unit time) of the injector 23, the injection period (from an injection start timing to an injection end timing) of the first injection shown in FIG. 6 is obtained. Moreover, an ignition delay period of the first injection as shown in FIG. 6 is obtained from a map. Then, together with the injection period and the ignition delay period of the first injection, the interval T from the injection end timing of the first injection timing to the injection start timing of the second injection (T = [injection period + ignition delay period of first injection]) is determined.

Note that, the map for obtaining the ignition delay period of the first injection is obtained by mapping values fitted through experimentation/simulation or the like of the ignition delay period of the first injection using, for example, the state of gas in the cylinder before ignition (such as temperature, pressure, oxygen concentration), the fuel injection amount of the first injection, and the like as parameters, and is stored on, for example, the ROM 102 of the ECU 100.

Here, the interval T between the first injection and the second injection may be set to be longer than [injection period + ignition delay period of first injection], but since the inside of the combustion chamber is not likely to be sufficiently preheated by the premixed combustion by the first injection and there is a concern of ignition delay in diffusion the combustion by the second injection if the interval T between the first injection and the second injection is too long and the combustion centroid of the premixed combustion and the combustion centroid of the diffusion combustion are excessively apart in a heat generation rate waveform as shown in FIG. 6, in view of this point, the upper-limit value of the interval T between the first injection and the second injection is limited such that the ignition timing of the diffusion combustion is at a suitable timing.

(S26) Based on the injection period of the first injection and the interval T obtained in the processing [S25] above, the injection start timing and the injection end timing of the first injection is obtained (see FIG. 6).

At this time, whether the injection start timing (a calculated value) of the first injection is on the retardation side or on the advancement side relative to the aforementioned advancement guard value (See FIG. 5) is determined, and if the injection start timing of the first injection is on the retardation side relative to the advancement guard value, the injection start timing and the injection end timing of the first injection calculated in the above-described processing are used as-is, and a fuel injection pattern as shown in FIG. 6 is determined. Note that when the injection timing (a calculated value) of the first injection is on the retardation side relative to the advancement guard value, the injection timing of the first injection may be advanced to the advancement guard value in order to increase the extent of premixing in the premixed combustion by the first injection.

On the other hand, when the injection start timing (a calculated value) of the first injection is on the advancement side relative to the advancement guard value, the injection timing of the first injection is limited to the advancement guard value. At this time, if a decrease correction needs to be performed on the fuel injection amount of the first injection, the decrease-corrected amount of the first injection (the amount of exceeding fuel) is injected in after-injection that is performed after the second injection as shown in, for example, FIG. 7 to secure torque generation.

Then, executing fuel injection from the injector 23 based on the fuel injection pattern determined in the above-described manner (see FIG. 6 or FIG. 7) makes it possible to achieve combustion having a heat generation rate waveform as shown in FIG. 6 or FIG. 7, i.e., separated combustion in which premixed combustion and diffusion combustion are separated.

As described above, according to this embodiment, in the engine 1 in which the premixed combustion and the diffusion combustion are carried out in the combustion chamber, the fuel injection pattern is controlled such that the interval T between the first injection and the second injection equals the total period of the injection period of the first injection and the ignition delay period of combustion by the first injection, thus making it possible to achieve separated combustion in which the premixed combustion and the diffusion combustion are separated. Accordingly, it is possible to use the respective advantages of the premixed combustion and the diffusion combustion, thus enabling an improvement of exhaust emissions and combustion stability to be achieved. That is, as described above, it is possible that, while both the smoke generation amount and the NOx generation amount are suppressed by the premixed combustion, combustion stability is secured by the diffusion combustion that is separate from the premixed combustion. Moreover, separating the premixed combustion and the diffusion combustion does not allow ignition delay in the earlier premixed combustion to influence the later diffusion combustion, thus making it possible to secure combustion stability even when ignition delay in the premixed combustion is increased during a transient operation of an internal combustion engine or during use of fuel having a low cetane rating.

Moreover, in this embodiment, the injection timing of the second injection is retarded in accordance with a required NOx amount (diffusion combustion is retarded), and the fuel injection amount of the second injection is limited to an amount of fuel that is combustible in retarded diffusion combustion. It is therefore possible that, while smoke generation is suppressed, the NOx amount is restricted to a value as required.

Note that, in this embodiment also, the first injection may be divided injection in which injection is performed multiple times. Configuring the first injection as divided injection thus makes it possible to suppress unburnt HC caused by excessive diffusion.

### - Other embodiments -

In the embodiments above, a case has been described in which the present invention is applied to a common rail in-cylinder direct injection multi-cylinder (four-cylinder) diesel engine. The present invention is not limited to this configuration, and is applicable to a diesel engine having a discretionary number of cylinders, such as a six-cylinder diesel engine. In addition, engines to which the present invention is applicable are not limited to automobile engines.

In the embodiments above, a description has been provided of the engine 1 to which a piezo injector 23, which attains full valve opening only when an electric current is applied and thus changes the fuel injection rate, but the present invention is also applicable to engines to which variable injection rate injectors are applied.

In the embodiments described above, the maniverter 77 is provided with the NSR catalyst 75 and the DPNR catalyst 76, but a maniverter provided with the NSR catalyst 75 and a diesel particulate filter (DPF) may be used as well.

### [Industrial Applicability]

The present invention is usable for combustion control for an improvement of exhaust emissions and combustion stability in a common rail in-cylinder direct injection multi-cylinder diesel engine mounted in an automobile.

### [Reference Signs List]

- 1: Engine (Internal combustion engine)
- 3: Combustion chamber
- 23: Injector (fuel injection valve)
- 40: Crank position sensor
- 47: Accelerator opening sensor
- 100: ECU

## Claims

1. A combustion control apparatus for a compression self-ignition internal combustion engine in which fuel injected from a fuel injection valve into a combustion chamber is caused to combust in the combustion chamber by "premixed combustion" and "diffusion combustion" that is started after the "premixed combustion", comprising:
an injection control means that adjusts a fuel injection form of the fuel injection valve such that a combustion form in the combustion chamber is a combustion form in which a combustion centroid of the premixed combustion and a combustion centroid of the diffusion combustion are separated, and a minimum value of a heat generation rate between the two combustion centroids is smaller than a predetermined value.

2. The combustion control apparatus for an internal combustion engine according to claim 1, wherein
the fuel injection valve is capable of separately executing a first injection for mainly carrying out the "premixed combustion" as combustion in the combustion chamber and a second injection for mainly carrying out the "diffusion combustion" as combustion in the combustion chamber, and adjusting fuel injection forms of the first injection and the second injection controls the combustion form such that the combustion centroid of the premixed combustion and the combustion centroid of the diffusion combustion are separated and the minimum value of the overlapping heat generation rate between the two combustion centroids is smaller than the predetermined value.

3. The combustion control apparatus for an internal combustion engine according to claim 2, wherein
in accordance with a required NOx amount, the diffusion combustion is retarded by retarding an injection timing of the second injection for the diffusion combustion relative to a piston compression top dead center, and an injection timing of the first injection for the premixed combustion is adjusted such that the minimum value of the heat generation rate between the combustion centroid of the retarded diffusion combustion and the combustion centroid of the premixed combustion is smaller than the predetermined value.

4. The combustion control apparatus for an internal combustion engine according to claim 3, wherein
when retarding the diffusion combustion in accordance with the required NOx amount, an amount of fuel combustible in the retarded diffusion combustion is regarded as a fuel injection amount of the second injection, and a fuel injection amount of the first injection is determined based on the fuel injection amount of the second injection and a required total fuel injection amount.

5. The combustion control apparatus for an internal combustion engine according to claim 4, wherein
when the fuel injection amount of the first injection that is determined based on the fuel injection amount of the second injection and the required total fuel injection amount is greater than a predetermined upper-limit amount, the fuel injection form of the fuel injection valve is adjusted such that the amount of exceeding fuel is injected after the second injection.

6. The combustion control apparatus for an internal combustion engine according to any one of claims 2 to 5, wherein
when advancing an injection timing of the first injection relative to a piston compression top dead center, an amount of advancement of the injection timing of the first injection is limited by a guard value.

7. The combustion control apparatus for an internal combustion engine according to claim 6, wherein
the guard value for limiting the amount of advancement of the first injection is set in view of an amount of unburnt hydrocarbon generated.

8. The combustion control apparatus for an internal combustion engine according to any one of claims 2 to 7, wherein
execution of fuel injection by the first injection is divided into multiple times.

9. A combustion control apparatus for a compression self-ignition internal combustion engine in which fuel injected from a fuel injection valve into a combustion chamber is caused to combust in the combustion chamber by "premixed combustion" and "diffusion combustion" that is started after the "premixed combustion",
the fuel injection valve being capable of separately executing a first injection for mainly carrying out the "premixed combustion" and a second injection for mainly carrying out the "diffusion combustion" as forms of fuel injection by the fuel injection valve,
the combustion control apparatus comprising an injection control means that adjusts an interval between an injection end timing of the first injection for the premixed combustion and an injection start timing of the second injection for the diffusion combustion so as to be equal to or longer than a total period of an injection period of the first injection and an ignition delay period of combustion by the first injection.

10. The combustion control apparatus for an internal combustion engine according to claim 9, wherein
in accordance with a required NOx amount, the diffusion combustion is retarded by retarding an injection timing of the second injection for the diffusion combustion relative to a piston compression top dead center, and an injection timing of the first injection for the premixed combustion is adjusted such that the interval between the second injection in which the injection timing is retarded and the first injection is equal to or longer than the total period.

11. The combustion control apparatus for an internal combustion engine according to claim 10, wherein
when retarding the diffusion combustion in accordance with the required NOx amount, an amount of fuel combustible in the retarded diffusion combustion is regarded as a fuel injection amount of the second injection, and a fuel injection amount of the first injection is determined based on the fuel injection amount of the second injection and a required total fuel injection amount.

12. The combustion control apparatus for an internal combustion engine according to claim 11, wherein
when the fuel injection amount of the first injection that is determined based on the fuel injection amount of the second injection and the required total fuel injection amount is larger than a predetermined upper limit amount, the fuel injection form of the fuel injection valve is adjusted such that an amount of exceeding fuel is injected after the second injection.

13. The combustion control apparatus for an internal combustion engine according to any one of claims 9 to 12, wherein
when advancing an injection timing of the first injection relative to a piston compression top dead center, an amount of advancement of the injection timing of the first injection is limited by a guard value.

14. The combustion control apparatus for an internal combustion engine according to claim 13, wherein
the guard value for limiting the amount of advancement of the first injection is set in view of an amount of unburnt hydrocarbon generated.

15. The combustion control apparatus for an internal combustion engine according to any one of claims 9 to 14, wherein
execution of fuel injection by the first injection is divided into multiple times.
